Europäisches Patentamt

European Patent Office

Office européen des brevets

(19)

(11) **EP 1 381 239 A1**

(12) **EUROPEAN PATENT APPLICATION**

(43) Date of publication:
**14.01.2004 Bulletin 2004/03**

(51) Int Cl.⁷: **H04N 7/36**

(21) Application number: **03012433.3**

(22) Date of filing: **30.05.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Song, Byung-cheol**<br>  **Youngtong-dong, Paldal-gu, Suwon-si (KR)**<br>• **Chun, Kang-wook**<br>  **Taean-eup, Hwaseong-gun, Gyeonggi-do (KR)** |
| (30) Priority: **11.07.2002 KR 2002040405** | (74) Representative: **Grünecker, Kinkeldey,**<br>**Stockmair & Schwanhäusser Anwaltssozietät** |
| (71) Applicant: **SAMSUNG ELECTRONICS CO., LTD.**<br>**Suwon-City, Kyungki-do (KR)** | **Maximilianstrasse 58**<br>**80538 München (DE)** |

(54) **Method and apparatus for controlling amount of DCT computation performed to encode motion image**

(57)    A method and apparatus for controlling the amount of a DCT computation performed for motion image encoding is provided. In the DCT computation amount controlling method, first, both decoder complexity information that represents the amount of a decoding computation on previous image data and ME computation amount variation information that represents information on a variation in the amount of a motion estimation (ME) computation are received. Then, the skipping of DCT operations on current image data is controlled based on the received decoder complexity information and the received ME computation amount variation information. A computation amount allowed to a decoder can be fully used, and the computation complexity of a motion image encoder can be constantly maintained regardless of the characteristics of images.

**FIG. 3**

**Description**

BACKGROUND OF THE INVENTION

This application claims priority from Korean Patent Application No. 2002-40405, filed on July 11, 2002, in the Korean Intellectual Property Office, the disclosure of which is incorporated herein in its entirety by reference.

1. Field of the Invention

The present invention relates to a motion image encoding method and apparatus, and more particularly, to a method and apparatus for controlling the amount of DCT computation

2. Description of the Related Art

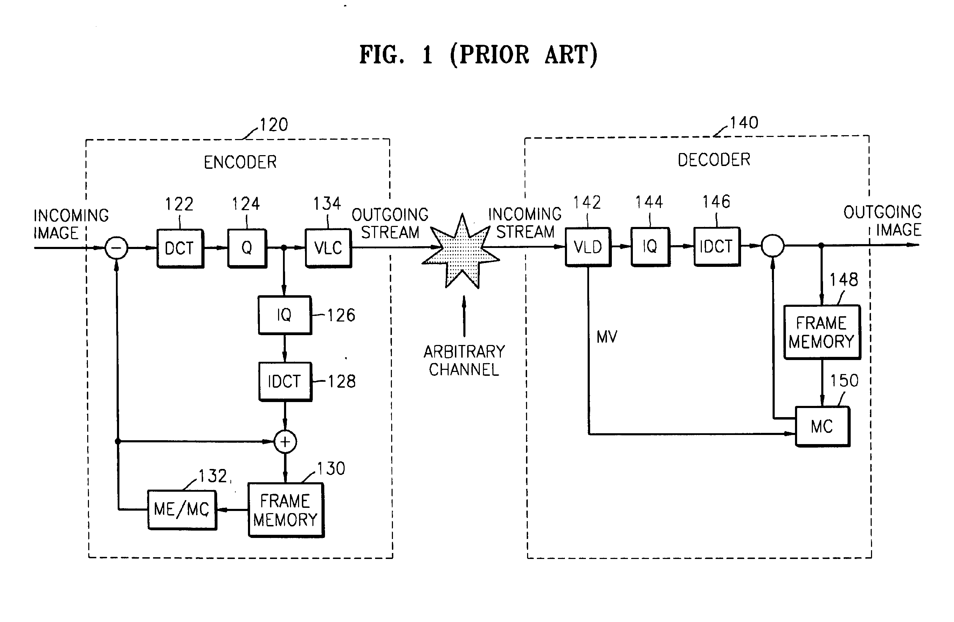

FIG. 1 is a block diagram showing an encoder 120 and a decoder 140 which are used for general motion image encoding. To achieve video on demand (VOD) services or motion image communications, the encoder 120 produces an encoded bit stream using a compression technique, and the decoder 140 restores an image from a received bit stream.

A discrete cosine transform (DCT) unit 122 performs a DCT operation on received image data in units of 8 × 8 pixel blocks in order to remove spatial correlation. A quantization (Q) unit 124 performs quantization on a DCT coefficient obtained by the DCT unit 122 to accomplish a high efficient loss-compression.

An inverse quantization (IQ) unit 126 inversely quantizes image data quantized by the Q unit 124. An inverse DCT (IDCT) unit 128 performs an IDCT on image data inversely quantized by the IQ unit 126. A frame memory 130 stores image data IDCT-ed by the IDCT unit 128, on a frame-by-frame basis.

A motion estimation (ME)/motion compensation (MC) unit 132 estimates a motion vector (MV) for individual macro blocks and a sum of absolute difference (SAD) corresponding to a block matching error, based on a received current image data frame and a previous image data frame that is stored in the frame memory 130.

A variable length coding (VLC) unit 134 removes statistical redundancy from DCT-ed and quantized data using the MV estimated by the ME/MC unit 132.

A bit stream encoded by the encoder 120 is decoded by the decoder 140, which includes a variable length decoding (VLD) unit 142, an IQ unit 144, an IDCT unit 146, a frame memory 148, and a MC unit 150.

VOD services or real-time motion image communications require real-time motion image encoding and decoding, which are achieved by effectively controlling the amount of computation made by an encoder and a decoder. In all kinds of motion image encoding techniques including MPEG 4 and H.26x, a DCT unit and a ME unit require the greatest amount of computation.

Hence, the encoder uses a DCT skipping technique and a fast ME algorithm to reduce the amount of computation made by the DCT unit and the ME unit. The amount of computation in the decoder is determined depending on the result of encoding by the encoder and is affected by the number of skipped blocks.

In addition, United States Patent Publication No. 6,122,321 discloses an encoder similar to the apparatus shown in FIG. 1.

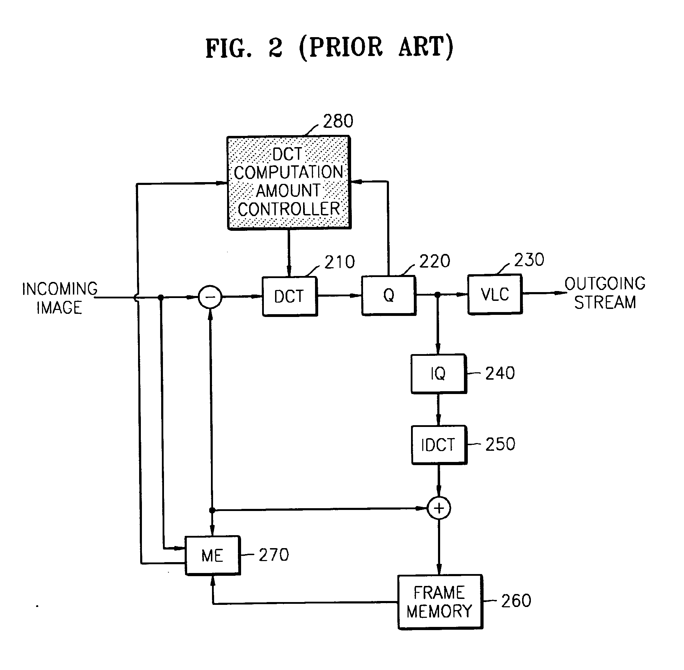

FIG. 2 shows a motion image encoder to which a conventional DCT skipping technique is applied. The structure of the motion image encoder of FIG. 2 is obtained by adding a DCT computation amount controller 280 for controlling the amount of DCT computation made by a DCT unit 210, to the encoder 120 of FIG. 1.

The DCT computation amount controller 280 compares an SAD for each block estimated by an ME 270 and a quantization coefficient (Q) of a Q unit 220 with a predetermined threshold value (T) in order to determine whether a DCT performed on each 8 × 8 pixel block in a DCT unit 210 is to be skipped. To be more specific, if the SAD/Q is smaller than the predetermined threshold value T, an end of block (EOB) is highly likely to be nearly 0, and accordingly the DCT computation amount controller 280 does not process received data. On the other hand, if the SAD/Q is greater than the predetermined threshold value T, the DCT computation amount controller 280 controls a DCT to be performed. Consequently, the amount of a DCT computation performed in the encoder is reduced.

However, in the case of conventional motion image encoders, there is a limit in the amount of computation that can be performed in a decoder, and the fact that an allocated computation amount and an actual computation amount may vary depending on circumstances is not considered. Hence, when a bit stream encoded by a conventional motion image encoder is input, the decoder cannot properly encode the received bit stream or cannot make full use of the allocated computation amount.

Also, in the case of conventional motion image encoders, the predetermined threshold value T is a fixed value within an image sequence, which means that the fact that DCT computation complexity varies for each macro block or frame is not considered. Thus, real-time encoding of received motion image data is not properly performed.

## SUMMARY OF THE INVENTION

The present invention provides a method and apparatus for controlling the amount of DCT computation performed for motion image encoding in an encoder in consideration of the amount of computation in a decoder, so that a computation amount allocated to the decoder is fully used, and an input bit stream is properly encoded.

The present invention also provides a method and apparatus for controlling the amount of DCT computation performed for motion image encoding, in which the computation complexity of a motion image encoder is kept constant regardless of the characteristics of images by applying a variation in the amount of motion estimation computation by a motion estimation unit to a DCT unit.

According to an aspect of the present invention, there is provided a method of controlling the amount of discrete cosine transform (DCT) computation for motion image encoding. In the method, decoder complexity information that represents the amount of decoding computation performed on previous image data is received. Then, the skipping of DCT operations on current image data is controlled based on the received decoder complexity information.

Preferably, the decoder complexity information receiving step further includes calculating the decoder complexity information which represents the amount of decoding computation performed on previous image data.

Preferably, the DCT skipping controlling step includes: calculating a target DCT computation amount for the current image data using the received decoder complexity information; calculating a threshold value used to skip execution of a DCT on the current image data, based on the calculated target DCT computation amount; and controlling the skipping of DCT operations on the current image data, depending on the calculated threshold value.

According to an aspect of the present invention, there is also provided a method of controlling the amount of DCT computation for motion image encoding. In the method, both decoder complexity information that represents the amount of a decoding computation on previous image data and ME computation amount variation information that represents information on a variation in the amount of a motion estimation (ME) computation are received. Then, the skipping of DCT operations on current image data is controlled based on the received decoder complexity information and the received ME computation amount variation information.

Preferably, the DCT skipping controlling step includes: calculating a target DCT computation amount for the current image data using the received decoder complexity information and the received ME computation amount variation information; calculating a threshold value used to skip execution of an DCT on the current image data, based on the calculated target DCT computation amount; and controlling the skipping of DCT operations on the current image data, depending on the calculated threshold value.

According to another aspect of the present invention, there is provided an apparatus for controlling the amount of a discrete cosine transform (DCT) computation for motion image encoding. The apparatus includes a DCT computation amount controller and a DCT unit. The DCT computation amount controller controls the skipping of DCT operations on current image data using decoder complexity information which represents the amount of decoding computation on input previous image data. The DCT unit performs a DCT operation or skips execution of a DCT operation on the input present image data based on a control signal output from the DCT computation amount controller.

Preferably, the apparatus further includes a decoder complexity calculator which calculates the decoder complexity information that represents the amount of a decoding computation on input previous image data.

Also, preferably, the DCT computation amount controller calculates a target DCT computation amount for the current image data using the decoder complexity information, calculates a threshold value used to skip execution of a DCT operation on the current image data, based on the calculated target DCT computation amount, and controls the skipping of DCT operations on the current image data depending on the calculated threshold value.

According to another aspect of the present invention, there is also provided an apparatus for controlling the amount of a DCT computation for motion image encoding. The apparatus includes a DCT computation amount controller and a DCT transformer. The DCT computation amount controller controls the skipping of DCT operations on current image data using both decoder complexity information which represents the amount of decoding computation on previous image data and ME computation amount variation information which represents information on a variation in the amount of motion estimation (ME) computation. The DCT transformer performs a DCT or skips execution of a DCT on the input present image data based on a control signal output from the DCT computation amount controller.

Preferably, the DCT computation amount controller calculates a target DCT computation amount for the current image data using the decoder complexity information and the ME computation amount variation information, calculates a threshold value used to skip execution of a DCT operation on the current image data, based on the calculated target DCT computation amount, and controls the skipping of DCT operations on the current image data depending on the calculated threshold value.

## BRIEF DESCRIPTION OF THE DRAWINGS

The above and other features and advantages of the present invention will become more apparent by describing in detail exemplary embodiments thereof with reference to the attached drawings in which:

FIG. 1 is a block diagram showing an encoder 120 and a decoder 140 which are used to perform a general motion image encoding;

FIG. 2 is a block diagram of a motion image encoder employing a conventional discrete cosine transform (DCT) skipping technique;

FIG. 3 is a block diagram showing a motion image encoder according to an embodiment of the present invention and a decoder;

FIG. 4 is a flowchart illustrating a method of controlling the amount of a DCT computation, according to an embodiment of the present invention;

FIG. 5 is a block diagram of a motion image encoder according to another embodiment of the present invention and a decoder; and

FIG. 6 is a flowchart illustrating a method of controlling the amount of a DCT computation, according to another embodiment of the present invention.

## DETAILED DESCRIPTION OF THE INVENTION

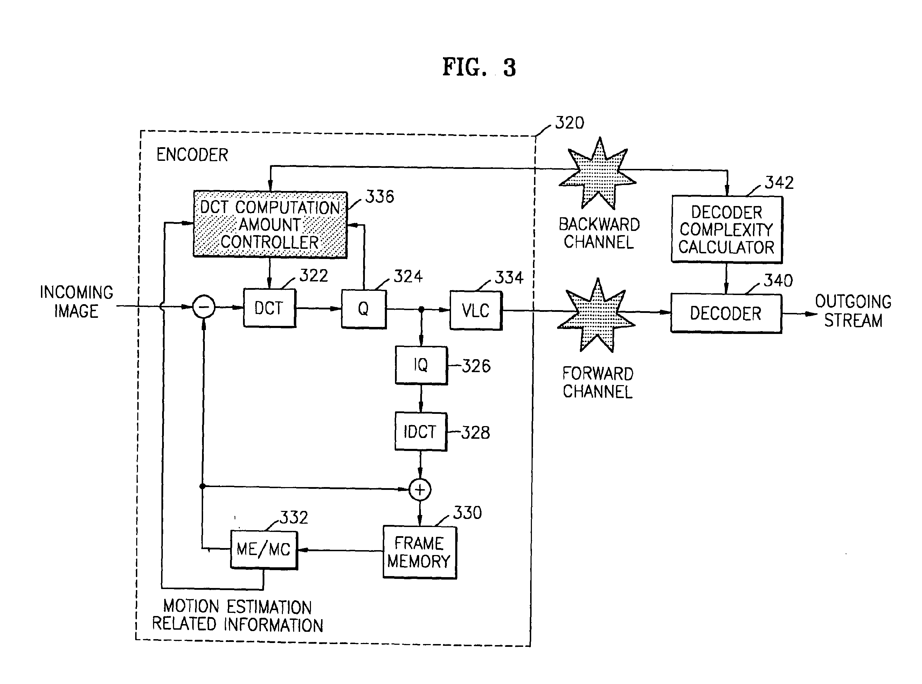

Referring to FIG. 3, a motion image encoder 320 according to the present invention includes a DCT unit 322, a Q unit 324, an IQ unit 326, an IDCT unit 328, a frame memory 330, an ME unit 332, a VLC unit 334, and a DCT computation amount controller 336. The DCT unit 322 performs a DCT computation on received image data. The Q unit 324 performs a quantization on a DCT coefficient obtained by the DCT unit 322, using a quantization coefficient Q. The IQ unit 326 inversely quantizes image data quantized by the Q unit 324. The IDCT unit 328 performs IDCT on image data inversely-quantized by the IQ unit 326. The frame memory 330 stores image data IDCT-ed by the IDCT unit 328 on a frame-by-frame basis. The ME 332 produces motion estimation related information using a currently received image data frame and a previous image data frame stored in the frame memory 330. The VLC unit 334 performs encoding by removing statistical redundancy from the DCT-ed and quantized data. The DCT computation amount controller 336 controls the amount of the DCT computation made by the DCT unit 322 based on decoder complexity information output from a decoder complexity calculator 342.

The decoder 340 includes a VLD unit, an IQ unit, an IDCT unit, a frame memory, and an MC unit (not shown), which correspond to those of the decoder 140 of FIG. 1. Thus, the structure of the decoder 340 will not be described in detail.

When the decoder 340 has completely decoded a previous frame, that is, an n-th frame (hereinafter, referred to as f(n)), the decoder complexity calculator 342 produces information on the amount of decoding computation performed on the previous frame f(n), that is, decoder complexity information, and transmits the decoder complexity information via a backward channel to the DCT computation amount controller 336 included in the encoder 320. If a ratio of the amount of processing of an IDCT computation to the amount of the decoding computation on the previous frame f(n) is $C_{IDCT}(n)$, the amount of computation that can be performed by the decoder is $C_{allowed}(n)$, and the actual amount of computation is $C_{total}(n)$, decoder complexity information for k recently-decoded frames is { $C_{IDCT}(j)$, $C_{allowed}(j)$ $C_{total}(j)$ | j= n-k+1,..., n}. Here, k denotes a variable that can be selectively set.

The actual amount of computation $C_{total}(n)$ denotes the total amount of computation performed on the n-th frame by the VLD unit, the IQ unit, the IDCT unit, and the MC unit included in the decoder 340. Although the IDCT computation amount $C_{IDCT}(n)$ is included in the decoder complexity information, an IDCT computation amount can be obtained by the IDCT unit 328 of the encoder 320, instead of including the IDCT computation amount $C_{IDCT}(n)$ in the decoder complexity information.

The DCT computation amount controller 336 controls the number of DCT operations performed on a current frame f(n+1) to be encoded among received image data in the DCT unit 322 according to a DCT skipping technique, based on the decoder complexity information received from the decoder complexity calculator 342.

In an embodiment of the present invention, if the actual amount of computation $C_{total}(n)$ for the previous frame f(n) decoded by the decoder 340 is smaller than the computation amount allowed to the decoder 340, $C_{allowed}(n)$, it is determined that the decoder does not currently make full use of allowed resources. Accordingly, the number of skipped DCT operations to be performed on frames next to a current frame f(n+1) is reduced to increase the amount of computation made by the encoder 320 and the decoder 340. In this case, the decoder 340 can properly perform decoding, and good image quality can be provided because of a reduction in the number of skipped DCT operations.

On the other hand, if the actual amount of computation $C_{total}(n)$ for the previous frame f(n) decoded by the decoder 340 is greater than the amount of computation that can be performed by the decoder 340, $C_{allowed}(n)$, the number of skipped DCT operations to be performed on frames next to the current frame f(n+1) is increased to reduce the amount of computation made by the encoder 320 and the decoder 340. Accordingly, the decoder 340 can properly perform decoding. In this case, the amount of a DCT computation performed in the decoder 340 decreases, but the quality of the image is deteriorated.

If the amount of computation that can be performed by the decoder 340 is 300 MIPS, and a computation amount actually consumed on the n-th frame f(n) is 250 MIPS, the number of skipped DCT operations is reduced to increase the amount of computation of the encoder 320 and the decoder 340 by the difference between the amount of computation that can be performed and the actual amount of computation, that is, a computation amount of about 50 MIPS, so that the decoder 340 can make full use of the amount of computation.

In contrast with the prior art in which a threshold value $T_{current}$ for DCT skipping on a current frame is fixed, in the present invention, a threshold value $T_{current}$ or $T_{n+1}$ for the current frame f(n+1) is updated in consideration of the amount of decoding performed on the previous frame f(n) in a decoder, that is, a decoder complexity, which is received from the decoder via a backward channel. Thus, the amount of computation allocated to be performed by the decoder can be fully used, and an input bit stream can be properly encoded.

In a process for calculating the threshold value $T_{n+1}$ for the current frame f(n+1), a DCT computation complexity can be expressed as shown in Equation 1, based on the characteristics that the DCT computation complexity is proportional to a reciprocal of the product of a threshold value and a quantization coefficient:

$$C = \frac{v}{TQ} \tag{1}$$

wherein C denotes the DCT computation complexity, T denotes the threshold value, and Q denotes the quantization coefficient.

In Equation 1, if the computation complexity, the threshold value, and the quantization coefficient of an n-th frame f(n) are $C_n$, $T_n$, and $Q_n$, respectively, $v$ is equal to $C_n T_n Q_n$, and a target threshold value $T_{n+1}$ of an (n+1)th frame can be obtained from Equation 2:

$$T_{n+1} = \frac{v}{C_t Q_{n+1}} \tag{2}$$

wherein $C_t$ denotes a target DCT computation complexity for the (n+1)th frame f(n+1).

Based on Equations 1 and 2, the target threshold value $T_{n+1}$ of the (n+1)th frame can also be obtained from Equation 3:

$$T_{n+1} = T_n \frac{Q_n C_n}{C_t Q_{n+1}} \tag{3}$$

Equation 3 can be re-arranged to Equation 4:

$$T_{n+1} = T_n \frac{Q_n}{Q_{n+1}} \left(1 + \frac{C_n - C_t}{C_t}\right) \tag{4}$$

Equation 4 can also be rearranged to Equation 5 in order to provide a little of flexibility:

$$T_{n+1} = T_n \frac{Q_n}{Q_{n+1}} \left(1 + \frac{C_n - C_t}{aC_t}\right) \tag{5}$$

wherein a denotes a parameter for controlling a convergence speed. Based on Equation 5, the target threshold value $T_{n+1}$ of the current frame f(n+1) depends on the threshold value $T_n$ at the previous frame f(n), the quantization coefficients $Q_n$ and $Q_{n+1}$ at the previous and current frames, a DCT computation complexity $C_n$ of the previous frame f(n), and the target DCT computation amount $C_t$ for the current frame f(n+1).

A method in which the DCT computation amount controller 336 determines the threshold value $T_{n+1}$ of the current frame f(n+1) based on Equation 5 and the decoder complexity obtained by the decoder complexity calculator 342 will now be described.

First, the DCT computation amount controller 336 in the encoder 320 calculates a target DCT computation amount for the current frame f(n+1) based on decoder complexity information received from the decoder complexity calculator 342. In an embodiment of the present invention, the target DCT computation amount for the current frame f(n+1) is calculated according to Equation 6:

$$C_t = \left( \sum_{j=n}^{n-k+1} \frac{C_{allowed}(j)}{C_{total}(j)} \right) \times \sum_{j=n}^{n-k+1} C_{IDCT}(j) \qquad \ldots(6)$$

The encoder 320 calculates the target DCT computation amount for the current frame f(n+1) using Equation 6. However, the encoder 320 may also calculate the target DCT computation amount for the current frame f(n+1) according to a predetermined equation, based on $C_{allowed}(n)$ and $C_{total}(n)$ received from the decoder complexity calculator 342.

The threshold value $T_{n+1}$ of the current frame f(n+1) can be calculated by substituting the target DCT computation amount $C_t$ for the current frame f(n+1) obtained by Equation 6 into Equation 5.

The DCT computation amount calculator 336 determines using Equation 7 whether a DCT operation is to be skipped for an i-th block of the current frame f(n+1), based on the calculated threshold value $T_{n+1}$ for the current frame f(n+1), an SAD value for the i-th block, $SAD_{n+1,i}$, and a quantization parameter $Q_{n+1}$ for the i-th block:

$$\frac{SAD_{n+1,i}}{Q_{n+1}} < T_{n+1} \qquad\qquad (7)$$

In other words, if the left side of Equation 7 is smaller than its right side as shown in Equation 7, the DCT unit 322 is set in a not-coded mode where a DCT operation is skipped, and accordingly, does not perform a DCT on the i-th block of the current frame f(n+1). If not, the DCT 322 performs a DCT on the i-th block of the current frame f(n+1).

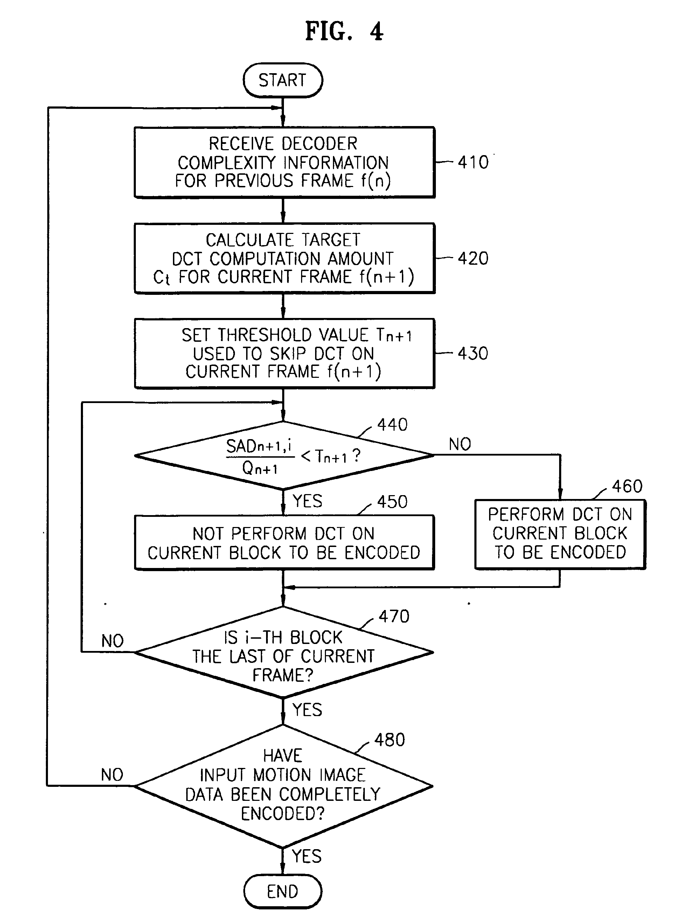

FIG. 4 is a flowchart illustrating a method of controlling the amount of a DCT computation based on decoder complexity, according to an embodiment of the present invention. Referring to FIGS. 3 and 4, in step 410, the DCT computation amount controller 336 of the encoder 320 receives decoder complexity information for k recently-decoded frames, { $C_{IDCT}(j)$, $C_{allowed}(j)$ $C_{total}(j)$ | j= n-k+1,..., n}, from the decoder complexity calculator 342 of the decoder 340 via the backward channel. The decoder complexity information for k recently-decoded frames includes information on a percentage of the total amount of computation performed in the decoder 340 occupied by the amount of IDCT computation, $C_{IDCT}(n)$, information on the amount of computation that can be performed by the decoder, $C_{allowed}(n)$, and information on the actual amount of computation $C_{total}(n)$. As described above, in the embodiment of the present invention, the IDCT computation amount $C_{IDCT}(j)$ is included in the decoder complexity information. However, the IDCT computation amount $C_{IDCT}(j)$ may be obtained by the IDCT unit 328 of the encoder 320.

In step 420, the target DCT computation amount $C_t$ for the current frame f(n+1) to be encoded is calculated based on the received decoder complexity information. In the embodiment of the present invention, Equation 6 is used to calculate the target DCT computation amount $C_t$ for the current frame f(n+1). However, a different equation may be used.

In step 430, the DCT computation amount controller 336 calculates the threshold value $T_{n+1}$ used to skip a DCT operation on the current frame f(n+1), based on the target DCT computation amount $C_t$ calculated in step 420, the DCT computation amount information $C_n$ of the previous frame f(n) received from the DCT unit 312, and the quantization coefficients $Q_n$ and $Q_{n+1}$ of the previous and current frames f(n) and f(n+1) received from the Q unit 314.

In step 440, the DCT computation amount controller 336 determines with respect to each $8 \times 8$ block whether the DCT unit 312 skips performing a DCT, based on the SAD value of the i-th block of the current frame f(n+1), which is used to determine whether to skip execution of a DCT operation and received from the ME/MC unit 332, and the quantization coefficient $Q_{n+1}$ received from the Q unit 314. To be more specific, if $SAD_{n+1,i}/ Q_{n+1}$ is smaller than the threshold value $T_{n+1}$ of the current frame f(n+1), step 440 proceeds to step 450. On the other hand, if $SAD_{n+1i}/Q_{n+1}$ is equal to or greater than the threshold value $T_{n+1}$ of the current frame f(n+1), step 440 proceeds to step 460.

In step 450, the operation of the DCT unit 312 with respect to the i-th block of the current frame f(n+1) is set to be in a non-coded mode, and accordingly the DCT unit 312 does not perform a DCT operation on the i-th block of the current frame f(n+1). Step 450 proceeds to step 470.

In step 460, the DCT unit 312 performs a DCT operation on the i-th block of the current frame f(n+1). Step 460 proceeds to step 470.

In step 470, it is determined whether the i-th block is the last in the current frame. If it is determined in step 470 that the i-th block is the last in the current frame, step 470 proceeds to step 480. If not, step 470 goes back to step 440, and accordingly steps 440 through 470 are repeated.

In step 480, it is determined whether input motion image data have been completely encoded. Accordingly, the above steps are repeatedly performed until all of the input motion image data are encoded.

Such an encoding in consideration of the amount of computation performed by a decoder enables a decoder to make full use of an allowed amount of computation.

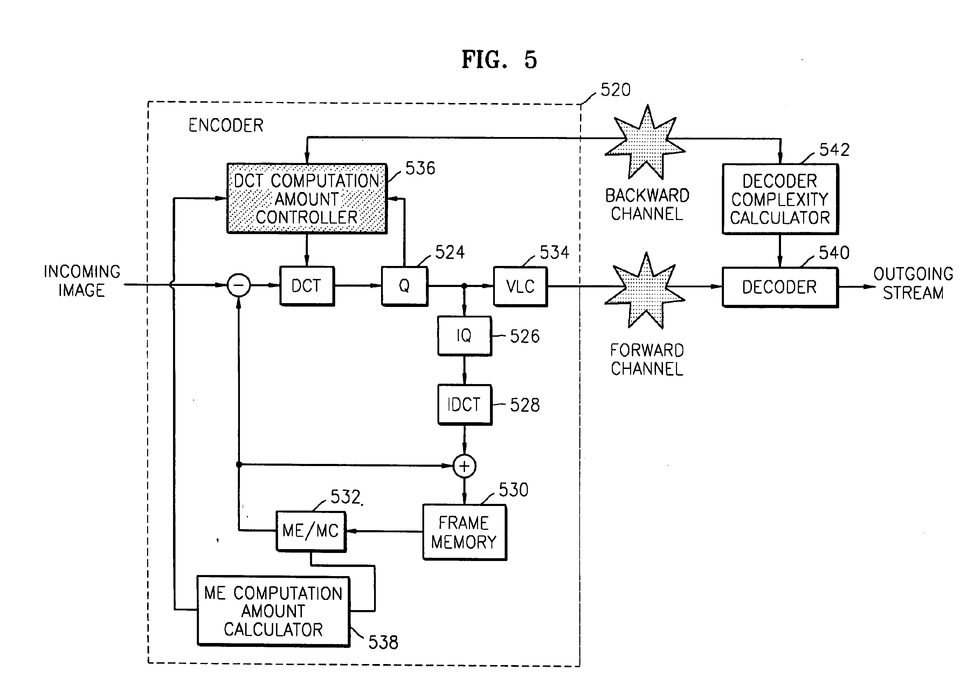

FIG. 5 is a block diagram of a motion image encoder 520 according to another embodiment of the present invention and a decoder 540. Referring to FIG. 5, the encoder 520 includes the elements of the encoder 320 of FIG. 3 and further an ME computation amount calculator 538 for calculating a variation in the amount of an ME computation made by an ME/MC unit 532.

The ME computation amount calculator 538 calculates a difference between the target amount of an ME computation by the ME/MC unit 532, $C_{ME,target}$, and the amount of an ME computation actually performed on the previous frame f(n), $C_{ME}(n)$, and transmits ME computation amount variation information based on the calculated difference to a DCT computation amount controller 536.

Since elements other than the DCT computation amount controller 536 and the ME computation amount calculator 538 are the same as those of the encoder 320 of FIG. 3, they will not be described in detail.

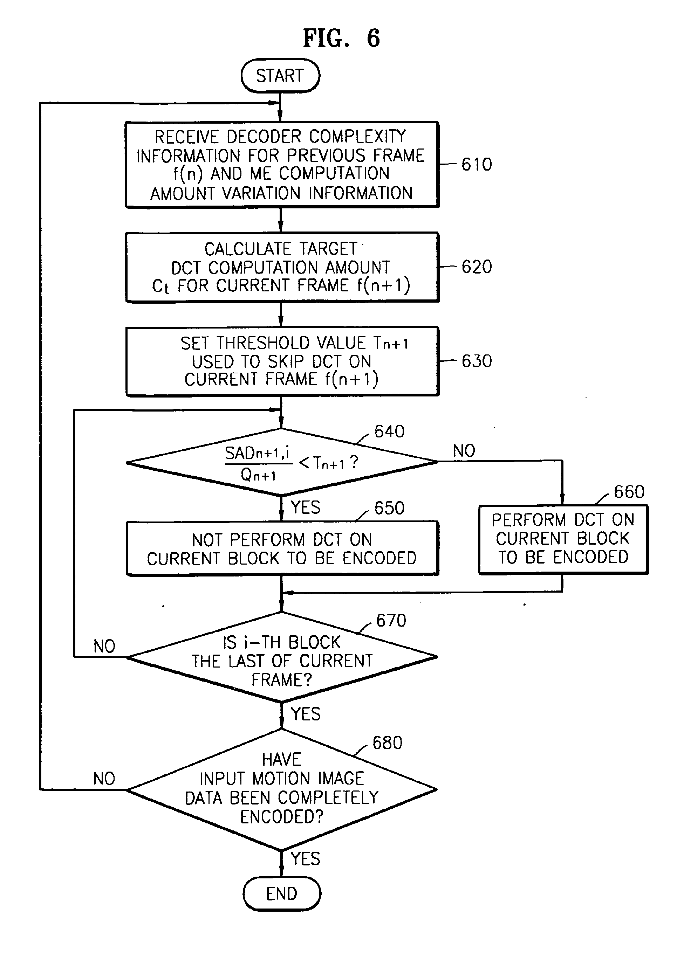

FIG. 6 is a flowchart illustrating a method of controlling the amount of DCT computation in consideration of ME computation amount variation information and decoder complexity, according to another embodiment of the present invention.

Referring to FIGS. 5 and 6, in step 610, the DCT computation amount controller 536 of the encoder 520 receives decoder complexity information from the decoder complexity calculator 542 via the backward channel and the ME computation amount variation information from the ME computation amount calculator 538. The decoder complexity information includes information on a ratio of the amount of processing of an IDCT computation to the total amount of computation performed in the decoder 540, $C_{IDCT}(n)$, information on the amount of computation that can be performed by the decoder, $C_{allowed}(n)$, and information on the actual amount of computation $C_{total}(n)$.

As described above, in the embodiment of the present invention, the IDCT computation amount $C_{IDCT}(j)$ is included in the decoder complexity information. However, the IDCT computation amount $C_{IDCT}(j)$ may be obtained by an IDCT unit 528 of the encoder 520.

In step 620, the target DCT computation amount $C_t$ for the current frame f(n+1) to be encoded is calculated based on the received decoder complexity information and ME computation amount variation information, using Equation 8:

$$C_t = \left( \sum_{j=n}^{n-k+1} \frac{C_{allowed}(j)}{C_{total}(j)} \right) \times \sum_{j=n}^{n-k+1} C_{IDCT}(j) + C_{ME,\mathrm{t\,arg\,et}} - C_{ME}(n) \qquad \ldots(8)$$

wherein $C_{ME,target}$ denotes the target amount of an ME computation performed on the current frame f(n+1) by the ME/MC unit 532, and $C_{ME}(n)$ denotes the amount of an ME computation actually performed on the previous frame f(n).

In the embodiment of the present invention, Equation 8 is used to calculate the target DCT computation amount $C_t$ for the current frame f(n+1) to be encoded. However, a different equation may be used.

In step 630, the DCT computation amount controller 536 calculates the threshold value $T_{n+1}$ used to skip a DCT operation on the current frame f(n+1), based on the target DCT computation amount $C_t$ calculated in step 620, the DCT computation amount information $C_n$ of the previous frame f(n) received from a DCT unit 522, and the quantization coefficients $Q_n$ and $Q_{n+1}$ of the previous and current frames f(n) and f(n+1) received from a Q unit 524.

In step 640, the DCT computation amount controller 536 determines with respect to each 8 x 8 block whether the DCT unit 522 skips performing a DCT, based on the SAD value of the i-th block of the current frame f(n+1), which is used to determine whether to skip execution of a DCT operation and received from the ME/MC unit 532, and the quantization coefficient $Q_{n+1}$ received from the Q unit 542. To be more specific, if $SAD_{n+1,i}/Q_{n+1}$ is smaller than the threshold value $T_{n+1}$ of the current frame f(n+1), step 640 proceeds to step 650. On the other hand, if $SAD_{n+1,i}/Q_{n+1}$ is equal to or greater than the threshold value $T_{n+1}$ of the current frame f(n+1), step 640 proceeds to step 660.

In step 650, the operation of the DCT unit 522 with respect to the i-th block of the current frame f(n+1) is set to be in a non-coded mode, and accordingly the DCT unit 522 does not perform a DCT operation on the i-th block of the current frame f(n+1).

In step 660, the DCT unit 522 performs a DCT operation on the i-th block of the current frame f(n+1).

In step 670, it is determined whether the i-th block is the last in the current frame. If it is determined in step 670 that the i-th block is the last in the current frame, step 670 proceeds to step 680. If not, step 670 goes back to step 640, and accordingly steps 640 through 670 are repeated.

In step 680, it is determined whether input motion image data have been completely encoded. Accordingly, the above steps are repeatedly performed until all of the input motion image data are encoded.

As described above, by controlling the amount of DCT computation in consideration of the complexity of a computation made by the decoder 540 and the variation in the amount of a computation by the ME/MC unit 524, the decoder 540 can make full use of an allowed computation amount. Also, the total amount of computation performed in an encoder can be maintained to be close to a target amount of computation.

While the present invention has been particularly shown and described with reference to exemplary embodiments thereof, it will be understood by those of ordinary skill in the art that various changes in form and details may be made therein without departing from the spirit and scope of the present invention as defined by the following claims.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and so on. Also, the computer readable codes can be transmitted via a carrier wave such as Internet. The computer readable recording medium can also be distributed over a network coupled computer systems so that the computer readable code is stored and executed in a distributed fashion.

As described above, in a DCT computation amount controlling method and apparatus according to the present invention, a motion image encoder employs a DCT skipping technique that considers information on the amount of a computation by a decoder and a variation in the amount of a computation by an ME unit. Thus, a computation amount allowed to the decoder can be maximally used, and an input bit stream can be normally encoded. Also, the computation complexity of the motion image encoder can be constantly maintained regardless of the characteristics of an image.

**Claims**

1. A method of controlling the amount of discrete cosine transform (DCT) computation for motion image encoding, the method comprising:

   receiving decoder complexity information that represents the amount of decoding computation performed on previous image data; and
   controlling the skipping of DCT operations on current image data based on the received decoder complexity information.

2. The method of claim 1, wherein receiving decoder complexity information further comprises calculating the decoder complexity information which represents the amount of decoding computation performed on previous image data.

3. The method of claim 1, wherein controlling the skipping of DCT operations comprises:

   calculating a target DCT computation amount for the current image data using the received decoder complexity information;
   calculating a threshold value used to skip execution of a DCT on the current image data, based on the calculated target DCT computation amount; and
   controlling the skipping of DCT operations on the current image data, depending on the calculated threshold value.

4. The method of claim 1, wherein the decoder complexity information includes information on a decoder computation amount allowed for the previous image data and information on a decoder computation amount actually consumed for the previous image data.

5. The method of claim 4, wherein the decoder complexity information further includes information on a ratio of the amount of processing of an inverse discrete cosine transform (IDCT) computation to the total amount of processing of computation required to decode the previous image data.

6. The method of claim 1, wherein the previous image data are a predetermined number of previous frames, and the current image data is a frame being currently encoded.

7. The method of claim 1, wherein a DCT operation on the current image data is executed or skipped in the currently-encoded frame on a block-by-block basis.

8. The method of claim 3, wherein the threshold value $T_{n+1}$ of the current image data is determined using the following equation:

$$T_{n+1} = T_n \frac{Q_n}{Q_{n+1}} \left(1 + \frac{C_n - C_t}{aC_t}\right)$$

wherein a denotes a parameter for controlling a convergent speed, $T_n$ denotes a threshold value of the previous image data, $Q_n$ denotes a quantization coefficient of the previous image data, $Q_{n+1}$ denotes a quantization coefficient of the current image data, $C_n$ denotes the amount of a DCT computation performed on the previous image data, and $C_t$ denotes a target DCT computation amount for the current image data.

9. The method of claim 3, wherein controlling the skipping of DCT operations further comprises skipping a DCT if the calculated threshold value is smaller than SAD/Q and performing a DCT if the calculated threshold value is greater than SAD/Q, wherein the sum of absolute difference (SAD) denotes a block matching error and the Q denotes a quantization coefficient of the current image data being encoded.

10. A method of controlling the amount of DCT computation for motion image encoding, the method comprising:

receiving both decoder complexity information that represents the amount of a decoding computation on previous image data and ME computation amount variation information that represents information on a variation in the amount of a motion estimation (ME) computation; and
controlling the skipping of DCT operations on current image data based on the received decoder complexity information and the received ME computation amount variation information.

11. The method of claim 10, wherein the information receiving step further comprises calculating the decoder complexity information that represents the amount of decoding computation on previous image data.

12. The method of claim 10, wherein the ME computation amount variation information is the difference between a target ME computation amount for the current image data and the amount of an ME computation actually performed on the previous image data.

13. The method of claim 10, wherein controlling the skipping of DCT operations comprises:

calculating a target DCT computation amount for the current image data using the received decoder complexity information and the received ME computation amount variation information;
calculating a threshold value used to skip execution of an DCT on the current image data, based on the calculated target DCT computation amount; and
controlling the skipping of DCT operations on the current image data, depending on the calculated threshold value.

14. The method of claim 10, wherein the decoder complexity information includes information on a decoder computation amount allowed for the previous image data and information on a decoder computation amount actually consumed for the previous image data.

15. The method of claim 12, wherein the decoder complexity information further includes information on a ratio of the amount of processing of an inverse discrete cosine transform (IDCT) computation to the total amount of processing of computation required to decode the previous image data.

16. The method of claim 10, wherein the previous image data are a predetermined number of previous frames, and the current image data is a frame being currently encoded.

17. The method of claim 8, wherein a DCT on the current image data is executed or skipped in the currently-encoded frame on a block-by-block basis.

18. The method of claim 11, wherein the threshold value $T_{n+1}$ of the current image data is determined using the following equation:

$$T_{n+1} = T_n \frac{Q_n}{Q_{n+1}} \left(1 + \frac{C_n - C_t}{aC_t}\right)$$

wherein a denotes a parameter for controlling a convergent speed, $T_n$ denotes a threshold value of the previous image data, $Q_n$ denotes a quantization coefficient of the previous image data, $Q_{n+1}$ denotes a quantization coefficient of the current image data, $C_n$ denotes the amount of a DCT computation performed on the previous image data, and $C_t$ denotes a target DCT computation amount for the current image data.

19. The method of claim 11, wherein controlling the skipping of DCT operations further comprises skipping a DCT if the calculated threshold value is smaller than SAD/Q and performing a DCT if the calculated threshold value is greater than SAD/Q, wherein the sum of absolute difference (SAD) denotes a block matching error and the Q denotes a quantization coefficient of the current image data being encoded.

20. An apparatus for controlling the amount of a discrete cosine transform (DCT) computation for motion image encoding, the apparatus comprising:

    a DCT computation amount controller controlling the skipping of DCT operations on current image data using decoder complexity information which represents the amount of decoding computation on input previous image data; and
    a DCT unit performing a DCT operation or skipping execution of a DCT operation on the input present image data based on a control signal output from the DCT computation amount controller.

21. The apparatus of claim 20, further comprising a decoder complexity calculator calculating the decoder complexity information that represents the amount of a decoding computation on input previous image data.

22. The apparatus of claim 20, wherein the DCT computation amount controller calculates a target DCT computation amount for the current image data using the decoder complexity information, calculates a threshold value used to skip execution of an DCT operation on the current image data, based on the calculated target DCT computation amount, and controls the skipping of DCT operations on the current image data depending on the calculated threshold value.

23. The apparatus of claim 20, wherein the decoder complexity information includes information on a decoder computation amount allowed for the previous image data and information on a decoder computation amount actually consumed for the previous image data.

24. The apparatus of claim 22, wherein the decoder complexity information further comprises information on a ratio of the amount of processing of an inverse discrete cosine transform (IDCT) computation to the total amount of processing of computation required to decode the previous image data.

25. The apparatus of claim 20, wherein the previous image data are a predetermined number of previous frames, and the current image data is a frame being currently encoded.

26. The apparatus of claim 20, wherein a DCT operation on the current image data is executed or skipped in the currently-encoded frame on a block-by-block basis.

27. The apparatus of claim 22, wherein the threshold value $T_{n+1}$ of the current image data is determined using the following equation:

$$T_{n+1} = T_n \frac{Q_n}{Q_{n+1}} \left(1 + \frac{C_n - C_t}{aC_t}\right)$$

wherein $\alpha$ denotes a parameter for controlling a convergent speed, $T_n$ denotes a threshold value of the previous image data, $Q_n$ denotes a quantization coefficient of the previous image data, $Q_{n+1}$ denotes a quantization coefficient of the current image data, $C_n$ denotes the amount of a DCT computation performed on the previous image data, and $C_t$ denotes a target DCT computation amount for the current image data.

28. The apparatus of claim 22, wherein the DCT computation amount controller further skips a DCT if the calculated threshold value is smaller than SAD/Q and performs a DCT if the calculated threshold value is greater than SAD/Q, wherein the sum of absolute difference (SAD) denotes a block matching error and the Q denotes a quantization coefficient of the current image data being encoded.

**29.** An apparatus for controlling the amount of a DCT computation for motion image encoding, the apparatus comprising:

a DCT computation amount controller controlling the skipping of DCT operations on current image data using both decoder complexity information which represents the amount of decoding computation on previous image data and ME computation amount variation information which represents information on a variation in the amount of motion estimation (ME) computation; and
a DCT transformer performing a DCT operation or skipping execution of a DCT operation on the input present image data based on a control signal output from the DCT computation amount controller.

**30.** The apparatus of claim 29, further comprising a decoder complexity calculator calculating the decoder complexity information that represents the amount of a decoding computation on input previous image data.

**31.** The apparatus of claim 29, wherein the ME computation amount variation information is the difference between a target ME computation amount for the current image data and the amount of an ME computation actually-performed on the previous image data.

**32.** The apparatus of claim 29, wherein the DCT computation amount controller calculates a target DCT computation amount for the current image data using the decoder complexity information and the ME computation amount variation information, calculates a threshold value used to skip execution of an DCT operation on the current image data, based on the calculated target DCT computation amount, and controls the skipping of DCT operations on the current image data depending on the calculated threshold value.

**33.** The apparatus of claim 29, wherein the decoder complexity information includes information on a decoder computation amount allowed for the previous image data and information on a decoder computation amount actually consumed for the previous image data.

**34.** The apparatus of claim 33, wherein the decoder complexity information further includes information on a ratio of the amount of processing of an inverse discrete cosine transform (IDCT) computation to the total amount of processing of computation required to decode the previous image data.

**35.** The apparatus of claim 29, wherein the previous image data are a predetermined number of previous frames, and the current image data is a frame being currently encoded.

**36.** The apparatus of claim 29, wherein a DCT on the current image data is executed or skipped in the currently-encoded frame on a block-by-block basis.

**37.** The apparatus of claim 32, wherein the threshold value $T_{n+1}$ of the current image data is determined using the following equation:

$$T_{n+1} = T_n \frac{Q_n}{Q_{n+1}} (1 + \frac{C_n - C_t}{aC_t})$$

wherein a denotes a parameter for controlling a convergent speed, $T_n$ denotes a threshold value of the previous image data, $Q_n$ denotes a quantization coefficient of the previous image data, $Q_{n+1}$ denotes a quantization coefficient of the current image data, $C_n$ denotes the amount of a DCT computation performed on the previous image data, and $C_t$ denotes a target DCT computation amount for the current image data.

**38.** The apparatus of claim 32, wherein the DCT computation amount controller further skips a DCT if the calculated threshold value is smaller than SAD/Q and performs a DCT if the calculated threshold value is greater than SAD/Q, wherein the sum of absolute difference (SAD) denotes a block matching error and the Q denotes a quantization coefficient of the current image data being encoded.

# FIG. 1 (PRIOR ART)

ENCODER 120

INCOMING IMAGE

122 DCT

124 Q

134 VLC

OUTGOING STREAM

126 IQ

128 IDCT

130 FRAME MEMORY

132 ME/MC

ARBITRARY CHANNEL

INCOMING STREAM

DECODER 140

142 VLD

144 IQ

146 IDCT

MV

148 FRAME MEMORY

150 MC

OUTGOING IMAGE

EP 1 381 239 A1

12

## FIG. 2 (PRIOR ART)

# FIG. 3

INCOMING IMAGE → 

ENCODER — 320

DCT COMPUTATION AMOUNT CONTROLLER — 336

DCT — 322
Q — 324
VLC — 334
IQ — 326
IDCT — 328
FRAME MEMORY — 330
ME/MC — 332

MOTION ESTIMATION RELATED INFORMATION

BACKWARD CHANNEL

FORWARD CHANNEL

DECODER COMPLEXITY CALCULATOR — 342

DECODER — 340 → OUTGOING STREAM

## FIG. 4

START

RECEIVE DECODER COMPLEXITY INFORMATION FOR PREVIOUS FRAME f(n) — 410

CALCULATE TARGET DCT COMPUTATION AMOUNT $C_t$ FOR CURRENT FRAME f(n+1) — 420

SET THRESHOLD VALUE $T_{n+1}$ USED TO SKIP DCT ON CURRENT FRAME f(n+1) — 430

440 $\dfrac{SAD_{n+1,i}}{Q_{n+1}} < T_{n+1}$ ? — NO

YES — 450 NOT PERFORM DCT ON CURRENT BLOCK TO BE ENCODED

460 PERFORM DCT ON CURRENT BLOCK TO BE ENCODED

470 IS i—TH BLOCK THE LAST OF CURRENT FRAME? — NO

YES

480 HAVE INPUT MOTION IMAGE DATA BEEN COMPLETELY ENCODED? — NO

YES

END

# FIG. 5

ENCODER

520

DCT COMPUTATION AMOUNT CONTROLLER — 536

INCOMING IMAGE → — → DCT → Q (524) → VLC (534)

IQ — 526

IDCT — 528

FRAME MEMORY — 530

ME/MC — 532

ME COMPUTATION AMOUNT CALCULATOR — 538

BACKWARD CHANNEL

FORWARD CHANNEL

DECODER COMPLEXITY CALCULATOR — 542

DECODER — 540 → OUTGOING STREAM

EP 1 381 239 A1

16

# FIG. 6

START

RECEIVE DECODER COMPLEXITY
INFORMATION FOR PREVIOUS FRAME
f(n) AND ME COMPUTATION
AMOUNT VARIATION INFORMATION — 610

CALCULATE TARGET
DCT COMPUTATION AMOUNT
$C_t$ FOR CURRENT FRAME f(n+1) — 620

SET THRESHOLD VALUE $T_{n+1}$
USED TO SKIP DCT ON
CURRENT FRAME f(n+1) — 630

640
$$\frac{SAD_{n+1,i}}{Q_{n+1}} < T_{n+1}?$$
NO

YES 650

NOT PERFORM DCT ON
CURRENT BLOCK TO BE ENCODED

660
PERFORM DCT ON
CURRENT BLOCK
TO BE ENCODED

670
IS i—TH BLOCK
THE LAST OF CURRENT
FRAME?
NO

YES

680
HAVE
INPUT MOTION IMAGE
DATA BEEN COMPLETELY
ENCODED?
NO

YES

END

17

European Patent
Office

**EUROPEAN SEARCH REPORT**

Application Number

EP 03 01 2433

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | RAMANUJAN R S ET AL: "Adaptive streaming of MPEG video over IP networks" , LOCAL COMPUTER NETWORKS, 1997. PROCEEDINGS., 22ND ANNUAL CONFERENCE ON MINNEAPOLIS, MN, USA 2-5 NOV. 1997, LOS ALAMITOS, CA, USA,IEEE COMPUT. SOC, US, PAGE(S) 398-409 XP010252445 ISBN: 0-8186-8141-1 * abstract * * page 399, column 1, line 18 - line 23 * * page 399, column 2, line 18 - line 23 * * page 401, column 1 * * page 402, column 2, line 32 - line 38 * * page 405, column 2, line 49 - page 406 * | 1,20 | H04N7/36 |
| Y | | 2,6,7, 10-12, 16,17, 20,29 | |
| P,Y | US 2002/118754 A1 (CHOI SUNG-KYU) 29 August 2002 (2002-08-29)<br><br>* page 1, column 2, paragraph 19 - page 2, column 1, paragraph 19; figure 3 * | 2,6,7, 10-12, 16,17, 20,29 | TECHNICAL FIELDS SEARCHED (Int.Cl.7)<br><br>H04N |
| Y | & KR 2001 053 814 A (SAMSUNG ELECTRONICS CO LTD) 2 July 2001 (2001-07-02) | | |
| A | WU D ET AL: "ON END-TO-END ARCHITECTURE FOR TRANSPORTING MPEG-4 VIDEO OVER THE INTERNET" , IEEE TRANSACTIONS ON CIRCUITS AND SYSTEMS FOR VIDEO TECHNOLOGY, IEEE INC. NEW YORK, US, VOL. 10, NR. 6, PAGE(S) 923-941 XP000959034 ISSN: 1051-8215 * the whole document *<br><br>-/-- | 1-38 | |

The present search report has been drawn up for all claims

| Place of search | Date of completion of the search | Examiner |
|---|---|---|
| MUNICH | 15 September 2003 | Lindgren, J |

EPO FORM 1503 03.82 (P04C01)

European Patent Office

**EUROPEAN SEARCH REPORT**

Application Number

EP 03 01 2433

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 356 309 B1 (KUROBE AKIO  ET AL) 12 March 2002 (2002-03-12) * the whole document * ----- | 1-38 | |

TECHNICAL FIELDS SEARCHED      (Int.Cl.7)

The present search report has been drawn up for all claims

| Place of search | Date of completion of the search | Examiner |
|---|---|---|
| MUNICH | 15 September 2003 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 01 2433

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2003

| Patent document cited in search report | | Publication date | Patent family member(s) | | Publication date |
|---|---|---|---|---|---|
| US 2002118754 | A1 | 29-08-2002 | KR | 2001053814 A | 02-07-2001 |
| US 6356309 | B1 | 12-03-2002 | CN | 1152242 A | 18-06-1997 |
| | | | EP | 0757490 A2 | 05-02-1997 |
| | | | JP | 10028269 A | 27-01-1998 |
| | | | KR | 255229 B1 | 01-05-2000 |
| | | | SG | 74565 A1 | 22-08-2000 |

EPO FORM P0459

For more details about this annex : see Official Journal of the European Patent Office, No. 12/82